# EUROPEAN PATENT APPLICATION

(11) **EP 2 187 470 A1**
(43) Date of publication of application: **19.05.2010**
(21) Application number: 08843305.7
(22) Date of filing: 22.09.2008
(51) Int. Cl.: H01M 8/04

(54) **FUEL SUPPLY APPARATUS**

(30) Priority: 23.10.2007 JP 2007274987
(71) Applicant: Panasonic Corporation, Kadoma-shi Osaka 571-8501 (JP)
(72) Inventor: KOZU, Katsumi, Chuo-ku, Osaka-shi, Osaka 543-6207 (JP)
(74) Representative: Schwabe - Sandmair - Marx
(86) International application number: PCT/JP2008/002604
(87) International publication number: WO 2009/054089

(57) **Abstract**

A fuel supply apparatus is for connecting a device including at least a part of a power generation section that has a fuel cell and having a fuel injection section with a fuel cartridge having a fuel supply section so as to send fuel in the fuel cartridge to the power generation section side. The fuel supply apparatus includes a holder having a first connector to be connected to the fuel injection section of the device, a second connector to be connected to the fuel supply section of the fuel cartridge, and a connecting pipe connecting the first connector with the second connector. A guide member for guiding connection between the first connector of the holder and the fuel injection section of the device is provided.

## Description

### TECHNICAL FIELD

The present invention relates to a user-friendly fuel supply apparatus that facilitates connecting a device including a power generation section having a fuel cell with a fuel cartridge.

### BACKGROUND ART

Recently, with the rapid widespread of portable and cordless electronic devices, as driving power sources for such electronic devices, secondary batteries having a small size, light weight and large energy density have been increasingly demanded. Furthermore, much attention has been paid to fuel cells that can be continuously used for a long time with fuel supplied, rather than secondary batteries that need charging.

As small fuel cells to be mounted in small portable electronic devices, fuel cells using a liquid fuel such as methanol, a methanol aqueous solution, and a formic acid aqueous solution have received much attention. In general, such fuels are harmful to human bodies. Therefore, it is considered that such fuels are supplied in a state in which they are filled in a fuel cartridge and injected into electronic device so that the fuels do not leak out by directly connecting a connector of the fuel cartridge with a connector at the electronic device side on which a fuel cell is mounted. Since the electronic device is generally required to be connected to a fuel cartridge whose types and concentrations of fuels conform to those of the electronic device, a structure in which the connector of the fuel cartridge and the connector of the electronic device are prevented from being wrongly inserted by providing a pair of special mechanical keys is employed.

Furthermore, connectors have been developed, which have a shape that is devised so that a fuel does not leak out even if an unexpected force is applied when the connectors are connected or when fuel is supplied (for example, Patent Document 1).

However, when the connectors are small, it is not easy for users having poor eyesight, for example, elderly persons to reliably connect these connectors. Furthermore, it is difficult for children and elderly persons to supply fuel to the electronic device side by pressing the fuel cartridge by hand while connecting the electronic device to the fuel cartridge. Additionally, in a state in which the fuel cartridge is connected to the electronic device, if an excessive force is applied to them, the fuel cartridge or the electronic device may be broken in the vicinity of the connectors thereof.

In order to solve a problem occurring when a fuel cartridge and an electronic device are directly connected with each other, a mechanism such as a charger holder of a portable telephone is considered. However, since a charger holder has a one-to-one relation with respect to a portable telephone and the charger holder itself is a special-purposed device, the versatility is low. Furthermore, even if a different portable telephone is wrongly inserted into a charger holder, leakage of liquid harmful to human bodies does not occur. Furthermore, a multiple protection by, for example, a safety circuit of a secondary battery mounted on the charger holder or the portable telephone is provided.

However, when the connector of the electronic device and the connector of the fuel cartridge are connected with each other indirectly, the mechanical strength is reduced due to miniaturization and a forcible connection may be made. Therefore, there are problems that a fuel liquid may be leaked due to breakage of a connector or wrong insertion may easily occur, which are not necessary to be considered in secondary batteries.
Patent Document 1: Japanese Patent Unexamined Publication No. 2007-128850

### SUMMARY OF THE INVENTION

A fuel supply apparatus of the present invention is a fuel supply apparatus for connecting a device with a fuel cartridge having a fuel supply section so as to send fuel in the fuel cartridge to the power generation section side. The device includes at least a part of a power generation section that has a fuel cell and having a fuel injection section. The fuel supply apparatus includes a holder having a first connector to be connected to the fuel injection section of the device, a second connector to be connected to the fuel supply section of the fuel cartridge, a connecting pipe connecting the first connector with the second connector, and a guide member for guiding connection between the first connector of the holder and the fuel injection section of the device.

With this configuration, breakage or wrong insertion of a fuel injection section of a device can be prevented reliably. Furthermore, even when the shape of the fuel injection section of the device becomes smaller, since it is not necessary to confirm a connecting position and the like, a user-friendly and convenient fuel supply apparatus can be achieved.

### BRIEF DESCRIPTION OF THE DRAWINGS

Fig. 1 is a schematic sectional view illustrating a configuration of a fuel supply apparatus in accordance with a first exemplary embodiment of the present invention.
Fig. 2A is a sectional schematic view illustrating a method of connecting each component using the fuel supply apparatus in accordance with the first exemplary embodiment of the present invention.
Fig. 2B is a sectional schematic view illustrating a method of connecting each component using the fuel supply apparatus in accordance with the first exemplary embodiment of the present invention.
Fig. 2C is a sectional schematic view illustrating a method of connecting each component using the fuel supply apparatus in accordance with the first exemplary embodiment of the present invention.
Fig. 2D is a sectional schematic view illustrating a method of connecting each component using the fuel supply apparatus in accordance with the first exemplary embodiment of the present invention.
Fig. 3A is a perspective top plan view illustrating a method of connecting each component using the fuel supply apparatus in accordance with the first exemplary embodiment of the present invention.
Fig. 3B is a perspective top plan view illustrating a method of connecting each component using the fuel supply apparatus in accordance with the first exemplary embodiment of the present invention.
Fig. 3C is a perspective top plan view illustrating a method of connecting each component using the fuel supply apparatus in accordance with the first exemplary embodiment of the present invention.
Fig. 4 is a sectional view illustrating another example of a guide member to be used in the fuel supply apparatus in accordance with the first exemplary embodiment of the present invention.
Fig. 5 is a sectional view illustrating still another example of a guide member to be used in the fuel supply apparatus in accordance with the first exemplary embodiment of the present invention.
Fig.6A is a sectional view showing each component of another example of the fuel supply apparatus in accordance with the first exemplary embodiment of the present invention.
Fig.6B is a sectional view showing each component of another example of the fuel supply apparatus in accordance with the first exemplary embodiment of the present invention.
Fig.6C is a sectional view showing each component of another example of the fuel supply apparatus in accordance with the first exemplary embodiment of the present invention.
Fig. 7A is a top plan view showing each component of another example of the fuel supply apparatus in accordance with the first exemplary embodiment of the present invention.
Fig. 7B is a top plan view showing each component of another example of the fuel supply apparatus in accordance with the first exemplary embodiment of the present invention.
Fig. 7C is a top plan view showing each component of another example of the fuel supply apparatus in accordance with the first exemplary embodiment of the present invention.
Fig. 8A is a schematic top plan view showing a first connector to be used in the fuel supply apparatus in accordance with the first exemplary embodiment of the present invention.
Fig. 8B is a sectional view taken on line 8B-8B of Fig. 8A.
Fig. 8C is a schematic plan view showing a device to be used in the fuel supply apparatus seen from the fuel injection part side in accordance with the same exemplary embodiment.
Fig. 8D a sectional view taken on line 8D-8D of Fig. 8C.
Fig. 9A is a schematic plan view illustrating a guide member of a fuel supply apparatus in accordance with a second exemplary embodiment of the present invention.
Fig. 9B is a schematic plan view illustrating a holder of the fuel supply apparatus in accordance with the same exemplary embodiment.
Fig. 9C is a schematic top plan view showing a state in which the guide member is engaged into the holder in the fuel supply apparatus in accordance with the same exemplary embodiment.
Fig. 9D is a sectional view taken on line 9D-9D of Fig. 9C.
Fig. 10A is a schematic plan view illustrating another example of a guide member of the fuel supply apparatus in accordance with the second exemplary embodiment of the present invention.
Fig. 10B is a schematic plan view illustrating another example of a holder of the fuel supply apparatus in accordance with the same exemplary embodiment.
Fig. 10C is a schematic top plan view showing a state in which the guide member is engaged into the holder in the fuel supply apparatus in accordance with the same exemplary embodiment.
Fig. 10D is a sectional view taken on line 10D-10D of Fig. 10C.
Fig. 11A is a schematic plan view illustrating a device used with a fuel supply apparatus in accordance with a third exemplary embodiment of the present invention.
Fig. 11B is a schematic plan view illustrating a guide member in the fuel supply apparatus in accordance with the same exemplary embodiment.
Fig. 11C is a schematic top plan view showing a state in which the guide member is engaged into the device in the fuel supply apparatus in accordance with the same exemplary embodiment.
Fig. 11D is a sectional view taken on line 11D-11D of Fig. 11C.
Fig. 12 is a schematic perspective plan view illustrating a structure of a fuel supply apparatus in accordance with a fourth exemplary embodiment of the present invention.

### REFERENCE MARKS IN THE DRAWINGS

10, 200 fuel supply apparatus
12, 112, 132, 210 holder
14, 114, 134, 214 first connector
14a, 36a mechanical key
14b, 36c through hole
16, 46, 56, 76, 106, 126, 160, 216 guide member
16a, 46a, 56a, 76a, 106a, 126a opening
18, 218 second connector
20, 220 connecting pipe
30, 60, 80, 150 device
32 device main body
34 power generation section
36, 66, 86 fuel injection section
36b space
40 fuel cartridge
42 fuel cartridge main body
44 fuel supply section
106c concave part
114c, 134c convex part
152 slide groove
162 slide rail
230 device holder part
240 cartridge holder part

### DETAILED DESCRIPTION OF THE PREFERRED EMBODIMENT

Hereinafter, exemplary embodiments of the present invention are described with reference to drawings. Note here that the present invention is not limited to the contents mentioned below as long as it is based on the basic features described in the description.

### FIRST EXEMPLARY EMBODIMENT

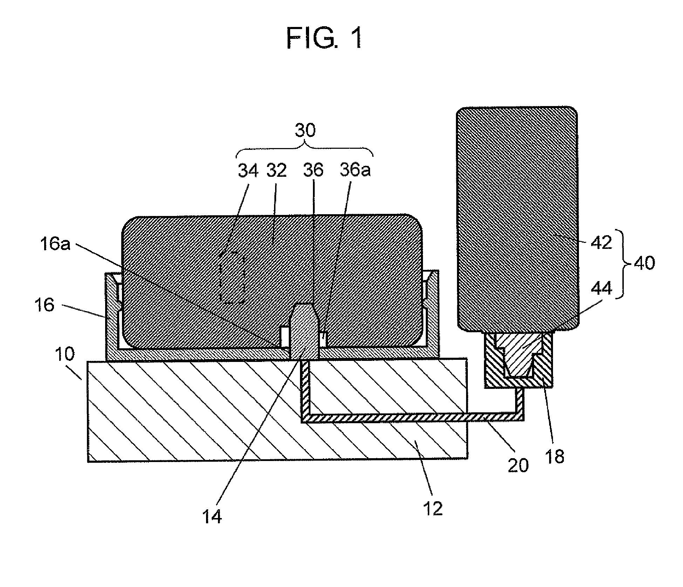

Fig. 1 is a schematic sectional view illustrating a configuration of a fuel supply apparatus in accordance with a first exemplary embodiment of the present invention. Note here that in a part of Fig. 1, for example, a power generation section of a device is shown as a perspective view for easy understanding.

As shown in Fig. 1, fuel supply apparatus 10 of the first exemplary embodiment of the present invention includes at least first connector 14 integrated into holder 12, guide member 16, second connector 18, and connecting pipe 20 connecting first connector 14 with second connector 18.

Guide member 16 has a shape for guiding along an outer shape of device 30 such as a portable telephone and opening 16a at least in a position of fuel injection section 36 of device 30. Guide member 16 guides connection between first connector 14 of holder 12 and fuel injection section 36 of device 30. Herein, convex parts are provided on the two side surfaces of guide member 16 so as to reduce the insertion resistance of the device. However, the convex parts are not necessarily provided.

Second connector 18 is connected to fuel cartridge 40 composed of fuel cartridge main body 42 and fuel supply section 44 having a shape that conforms to a shape of second connector 18. At this time, second connector 18 has a pair of mechanical keys 36a having special shapes capable of being coupled for recognizing whether or not the types and concentrations of the fuel conform to the operation of device 30, and whether fuel cartridge 40 is a pressurized cartridge or a non-pressurized cartridge.

Herein, device 30 includes device main body 32 including a power generation section 34 having a fuel cell, and fuel injection section 36 to be connected to first connector 14 of fuel supply apparatus 10. Power generation section 34 includes at least a fuel cell and a tank for storing fuel of the fuel cell. Note here that detailed description of the structures inside device 30 and fuel cartridge 40 is omitted.

Furthermore, in the above-mentioned first exemplary embodiment, first connector 14 does not necessarily have a special mechanical key corresponding to mechanical key 36a provided at fuel injection section 36 of device 30. In this case, fuel injection section 36 of device 30 is positioned with respect to first connector 14 by opening 16a of guide member 16.

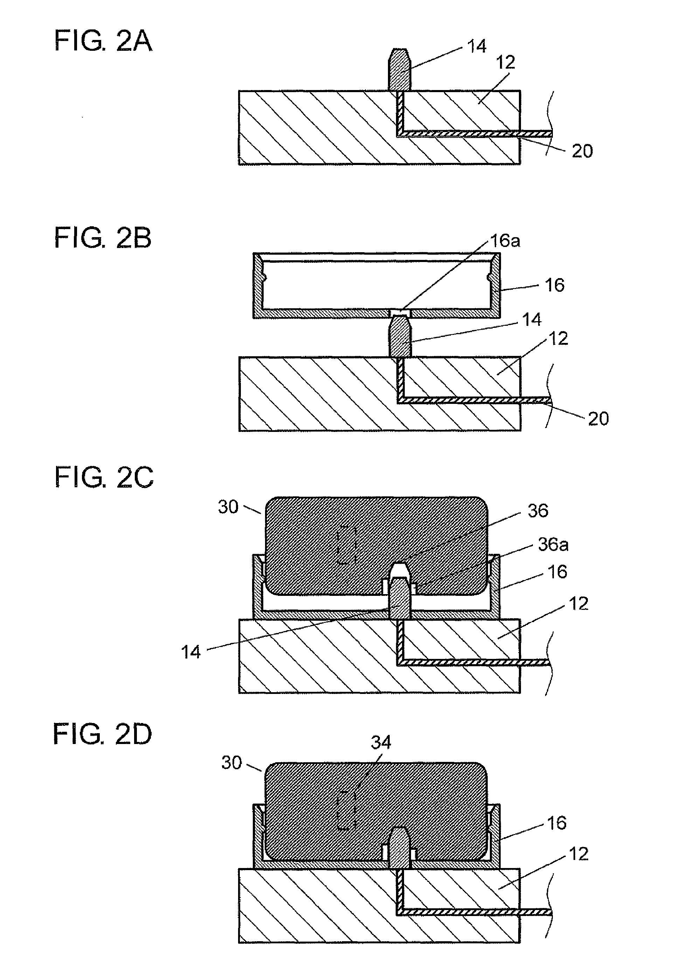

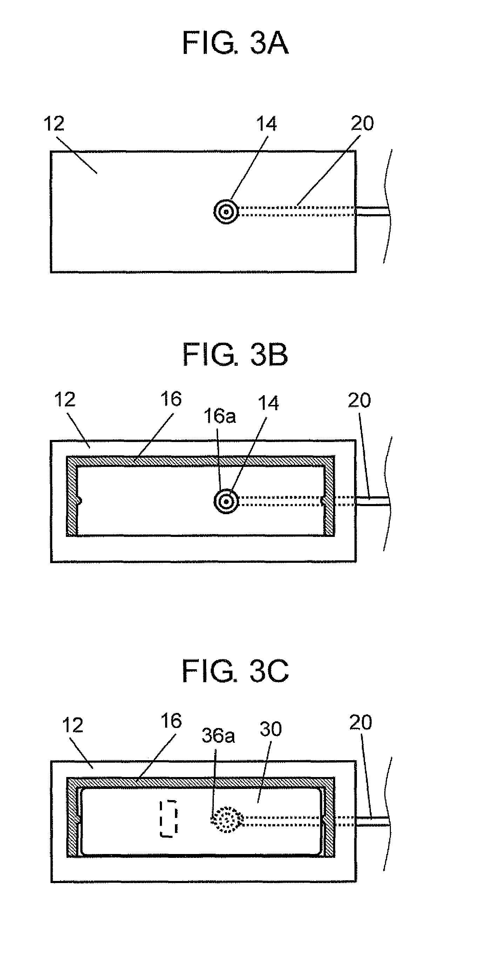

Hereinafter, a method of connecting each component in the fuel supply apparatus in the first exemplary embodiment of the present invention is specifically described with reference to Figs. 2A to 2D and Figs. 3A to 3C.

Figs. 2A to 2D are schematic sectional views illustrating a method of connecting each component of the fuel supply apparatus in accordance with the first exemplary embodiment of the present invention. Furthermore, Figs. 3A to 3C are perspective top plan views illustrating a method of connecting each component of the fuel supply apparatus in accordance with the first exemplary embodiment of the present invention. Note here that detailed description of each component is omitted because it is described with reference to Fig. 1.

Firstly, as shown in Figs. 2A and 3A, holder 12 having first connector 14 in a predetermined position is prepared. At this time, holder 12 is connected via connecting pipe 20 to a fuel cartridge (not shown) connected to a second connector (not shown).

Next, as shown in Fig. 2B, first connector 14 of holder 12 is positioned to opening 16a of guide member 16, and guide member 16 is fitted into holder 12. Thus, as shown in Figs. 2C and 3B, guide member 16 is integrated into holder 12.

Next, as shown in Fig. 2C, device 30 is guided along guide member 16 such that first connector 14 of holder 12 and fuel injection section 36 of device 30 are fitted into each other.

That is to say, guide member 16 can be placed to first connector 14 of holder 12. Device 30 is placed in a state in which guide member 16 is placed in first connector 14, and thereby first connector 14 is connected to fuel injection section 36 of device 30.

Through the procedures mentioned above, as shown in Figs. 2D and 3C, holder 12 and device 30 are mounted on fuel supply apparatus 10 via guide member 16.

Then, in the case of, for example, a non-pressurized cartridge (not shown), a fuel is supplied to power generation section 34 of device 30 by being pressed at the side surface thereof.

Herein, the fuel is intended to mean a liquid fuel such as methanol or an aqueous solution thereof, and formic acid.

Furthermore, first connector 14, second connector 18, holder 12, connecting pipe 20 and guide member 16 are made of any one of super engineering plastic such as ethanol-resistant polyethylene (PE), polypropylene (PP), polyethyletherketone (PEEK), polyphenylene sulfide (PPS), and liquid crystal polymer, and resin material such as polyethylene terephthalate (PET), polybutylene terephthalate (PBT), and polyacetal (POM) or a composite material thereof. In particular, it is preferable that first connector 14, second connector 18 and connecting pipe 20 are made of materials in which residues and metal cation and the like do not elute from a mother material when the mother material is brought into contact with a fuel.

According to this exemplary embodiment, with the guide member, breakage of a fuel injection section of a device or a first connector of a holder or wrong insertion therebetween can be securely prevented. That is to say, even in the case where the size of the shape of the fuel injection section of the device or the first connector is reduced and connection becomes difficult, it is not necessary to confirm the connection position and the like, thus facilitating the connection. Therefore, a fuel supply apparatus which is friendly to users, in particular, children or elderly persons who have difficulty in handling and which is excellent in convenience can be provided.

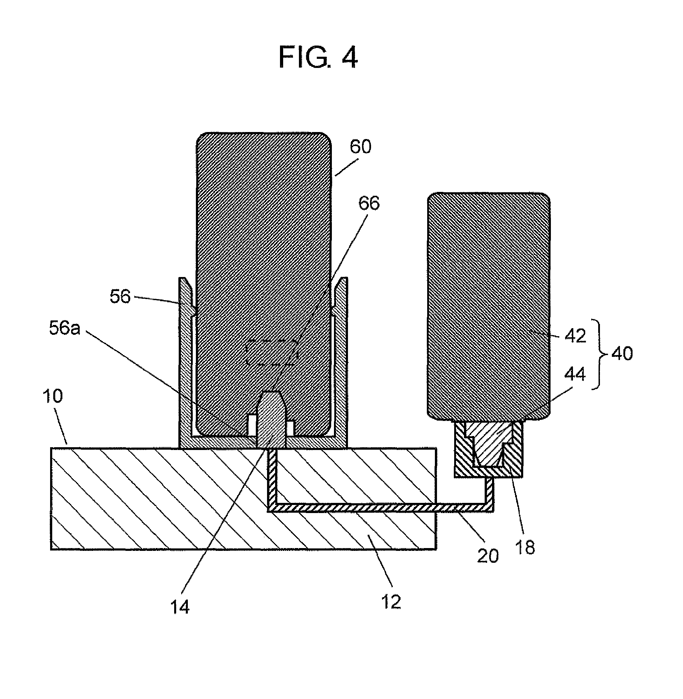

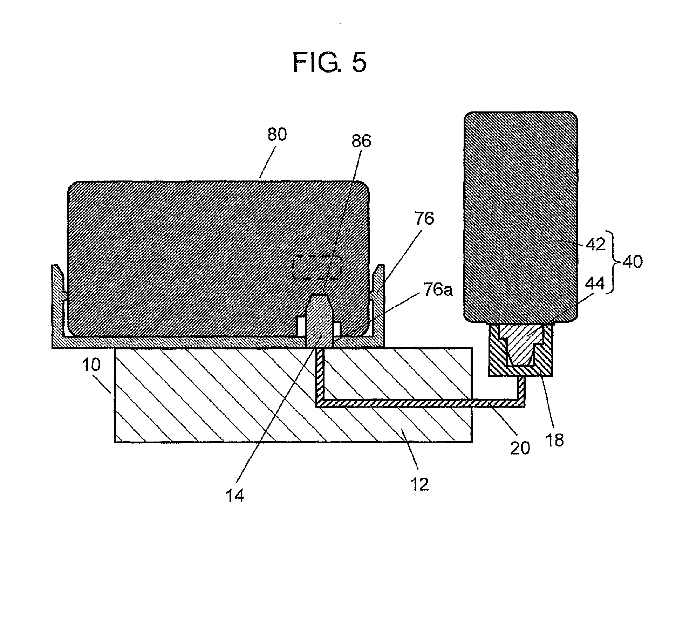

Note here that in this exemplary embodiment, guide member 16 corresponding to one device 30 and having substantially the same shape as the outer shape of device 30 is described as an example. However, guide member 16 is not limited to this example. That is to say, a guide member having a substantially equal shape to the outer shape of a different device is prepared for the different device whose fuel injection part has a shape that is equal to the shape of the first connector, and then a fuel injection section of the device and the first connector may be connected to each other via the prepared guide member. For example, as shown in Fig. 4, guide member 56 having a substantially equal shape as the outer shape of device 60 is provided with respect to device 60 such as a portable telephone having a narrow width and having fuel injection section 66 on the shorter side. Thus, first connector 14 of holder 12 and fuel injection section 66 of device 60 can be connected to each other via opening 56a of guide member 56. Furthermore, as shown in Fig. 5, guide member 76 having substantially the same shape as the outer shape of device 80 is provided with respect to device 80 such as PDA having a large width and having fuel injection section 86 on the right side of the longer side in the drawing. Thus, first connector 14 of holder 12 can be connected to fuel injection section 86 of device 80 via opening 76a of guide member 76.

Thus, any devices having a fuel injection section whose shape is equal to that of first connector 14 of holder 12 can use the holder in common by exchanging guide members even when the outer shapes and the positions of the fuel injection sections are different. Therefore, for example, when family members have devices whose outer shapes and the positions of the fuel injection section are different from each other, when the shapes of the fuel injection sections of the devices are equal to each other, a holder can be used in common. Thus, a fuel supply apparatus, which saves energy and does not put a load on the environment, can be provided.

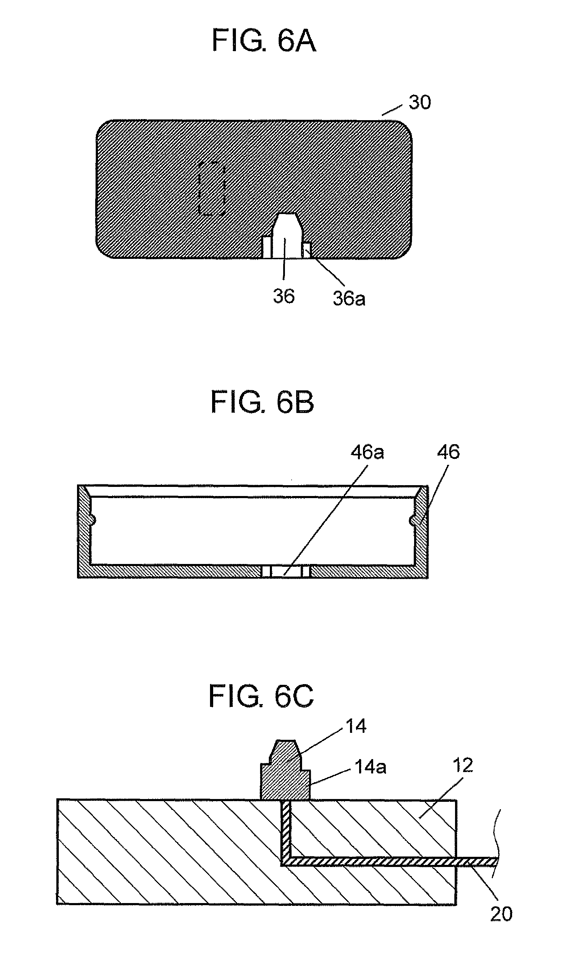

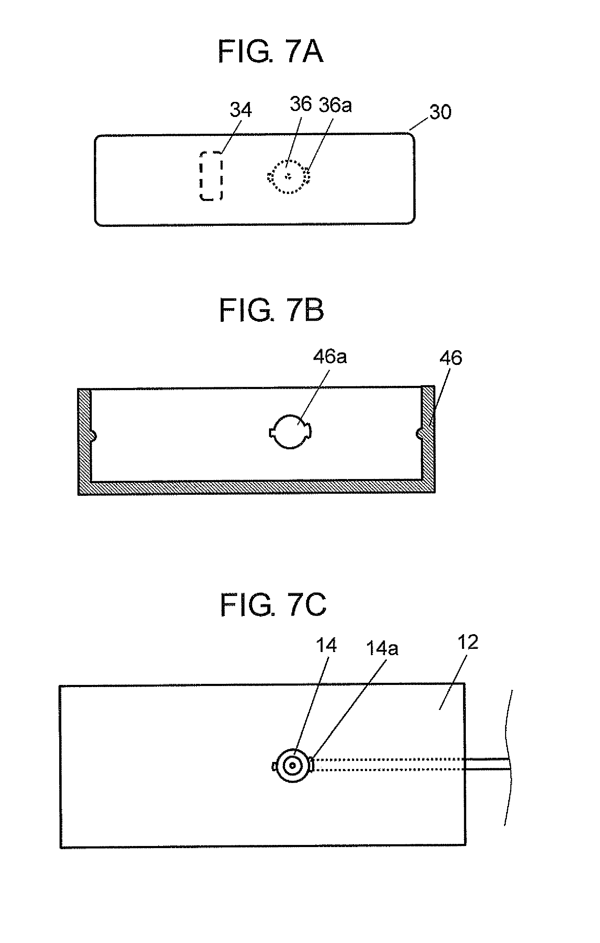

Hereinafter, another example of the fuel supply apparatus in accordance with the first exemplary embodiment of the present invention is described with reference to Figs. 6A to 6C and Figs. 7A to 7C.

Figs. 6A to 6C are sectional views showing each component of another example of the fuel supply apparatus in accordance with the first exemplary embodiment of the present invention. Furthermore, Figs. 7A to 7C are top plan views showing each component of another example of the fuel supply apparatus in accordance with the first exemplary embodiment of the present invention.

As shown in Figs. 6A to 6C and Figs. 7A to 7C, this fuel supply apparatus is different from fuel supply apparatus 10 shown in Fig. 1 in that first connector 14 provided on holder 12 has mechanical keys 14a having a shape corresponding to and capable of being coupled to mechanical keys 36a of fuel injection section 36 of device 30. At this time, as shown in Figs. 6A to 6C and Figs. 7A to 7C, guide member 46 has opening 46a into which first connector 14 having mechanical keys 14a is fitted at the position corresponding to first connector 14.

Thus, wrong insertion or breakage of a fuel injection section of a device and a first connector can be prevented more securely by a double protecting function by guide member 46 and mechanical keys 14a.

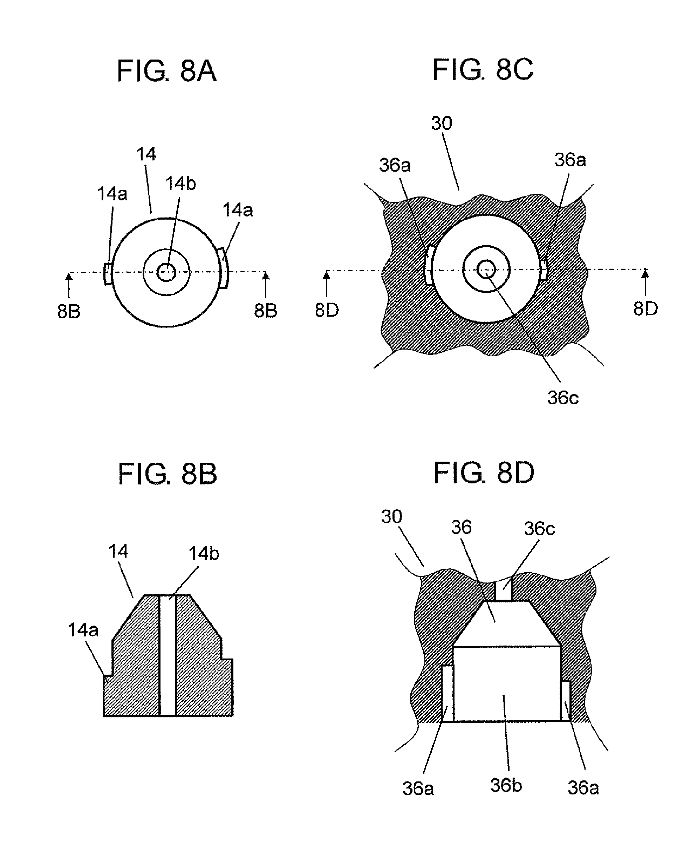

Hereinafter, an example of a mechanical key is described in detail with reference to Figs. 8A and 8D.

Fig 8A is a schematic top plan view showing first connector 14 to be used in the fuel supply apparatus in accordance with the first exemplary embodiment of the present invention. Fig. 8B is a sectional view taken on line 8B-8B of Fig. 8A. Fig. 8C is a schematic plan view showing device 30 to be used in the fuel supply apparatus seen from the fuel injection part 36 side in accordance with this exemplary embodiment. Fig. 8D is a sectional view taken on line 8D-8D of Fig. 8C.

As shown in Figs. 8A and 8B, first connector 14 has through hole 14b through which a fuel is allowed to pass in the center part thereof and two mechanical keys 14a formed by convex parts at the peripheral part thereof, for example. Furthermore, as shown in Figs. 8C and 8D, fuel injection section 36 of device 30 has space 36b for accommodating first connector 14 in the center part thereof. Following space 36b, through hole 36c through which a fuel is allowed to pass is provided. Furthermore, following the outside of space 36b, mechanical keys 36a formed by concave parts are provided at the position corresponding to mechanical keys 14a formed by convex parts. Then, by fitting mechanical keys 14a formed by convex parts and mechanical keys 36a formed by concave parts into each other, fuel injection section 36 of device 30 is made capable of being coupled to first connector 14. That is to say, mechanical keys 36a formed by concave parts of fuel injection section 36 and mechanical keys 14a formed by convex parts of first connector 14 form a pair of mechanical keys having special shapes capable of being coupled to each other. Note here that the shape of the mechanical key is not limited to this shape, and any shapes may be employed as long as they are a pair of shapes capable of being coupled to each other.

Furthermore, this exemplary embodiment describes an example in which the power generation section of the device is incorporated in the device. However, the example is not necessarily limited to this. For example, the power generation section is formed as a separated body from the device, and may be used in combination with the main body of the device. Furthermore, either the tank or the fuel cell mentioned above may be provided as a separated body from the device. That is to say, the device may include at least a part of the power generation section having a fuel cell.

Furthermore, in this exemplary embodiment, as the guide member, as shown in Fig. 3B, an example of a shape in which a bottom surface and three surfaces guide a device is described. The shape is not necessarily limited to this example. For example, the bottom surface and four surfaces may guide the device. This permits secure positioning with respect to the first connector.

Furthermore, as shown in Fig. 3B, this exemplary embodiment describes an example in which a device is guided by providing convex parts on a part of the two side surfaces of the guide member so as to reduce insertion resistance. The shape is not limited to this example. For example, convex parts may be provided on three surfaces, or a plurality of convex parts may be provided on each surface. Thus, the insertion resistance between the guide member and the device may be reduced. However, when the insertion resistance with respect to the device is small, the convex part is not necessarily provided.

### SECOND EXEMPLARY EMBODIMENT

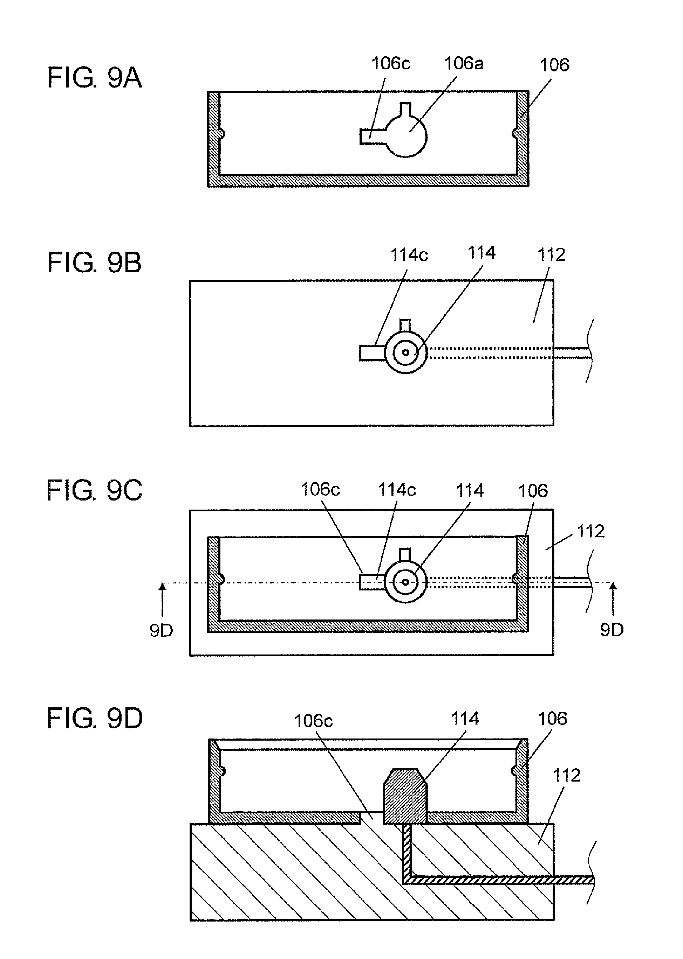

Fig. 9A is a schematic plan view illustrating a guide member of a fuel supply apparatus in accordance with a second exemplary embodiment of the present invention. Fig. 9B is a schematic plan view illustrating a holder of the fuel supply apparatus in accordance with this exemplary embodiment. Fig. 9C is a schematic top plan view showing a state in which guide member 106 is engaged into holder 112 in the fuel supply apparatus in accordance with this exemplary embodiment. Fig. 9D is a sectional view taken on line 9D-9D of Fig. 9C. Note here that since the other components are the same as those of the first exemplary embodiment, the description thereof is omitted.

That is to say, this exemplary embodiment is different from the first exemplary embodiment in that concave part 106c as a mechanical key is provided at the periphery of opening 106a of guide member 106 as shown in Fig. 9A, and convex part 114c to be engaged into concave part 106c of guide member 106 is provided at the periphery of first connector 114 of holder 112 as shown in Fig. 9B. With this structure, the thickness of convex part 114c provided on holder 112 is required to be at least the same as or smaller than the thickness of the bottom part of guide member 106 as shown in Fig. 9D.

Note here that the mechanical key shown in this exemplary embodiment is different from the mechanical key provided for defining the types and concentrations of the specific fuel adapted to the device, and defining whether the fuel cartridge is a pressurized cartridge or a non-pressurized cartridge. The mechanical key of this exemplary embodiment is provided so as to specify guide member 106 adapted to holder 112.

According to this exemplary embodiment, a guide member adapted to a holder can be securely allowed to conform to and fitted in a state in which the mechanical strength is improved. As a result, as compared with the case where a guide member is fitted via a first connector, it is possible to prevent the first connector from being damaged or broken by the guide member.

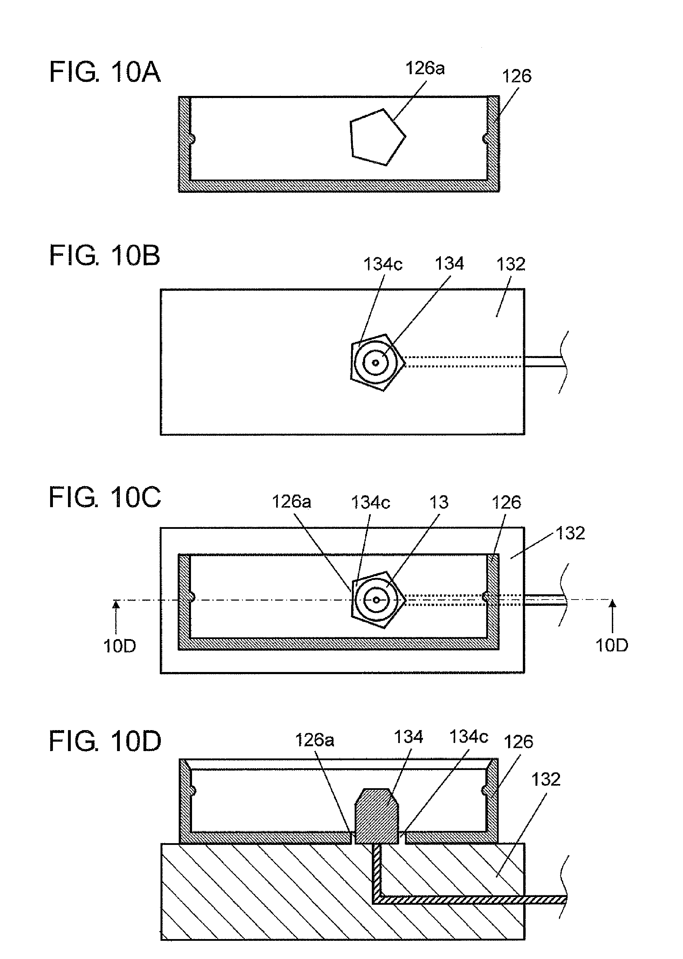

Note here that this exemplary embodiment describes an example of a configuration in which concave part 106c provided in the guide member and convex part 114c provided on the holder form a pair of mechanical keys capable of being coupled to each other. However, the configuration is not limited to this example. For example, as shown in Figs. 10A to 10D, the shape of opening 126a provided in guide member 126 is made to be a pentagon, and pentagon-shaped convex part 134c is provided at the position facing opening 126a at the periphery of first connector 134 of holder 132 and fitted therein. Herein, Fig. 10A is a schematic plan view illustrating another example of a guide member of the fuel supply apparatus in accordance with the second exemplary embodiment of the present invention. Fig. 10B is a schematic plan view illustrating another example of a holder of the fuel supply apparatus in accordance with this exemplary embodiment. Fig. 10C is a schematic top plan view showing a state in which guide member 126 is engaged into holder 132 in the fuel supply apparatus in accordance with this exemplary embodiment. Fig. 10D is a sectional view taken on line 10D-10D of Fig. 10C.

In the configuration, the shapes of opening 126a and convex part 134c may be a polygonal shape or a star shape other than a pentagonal shape. Shapes are not particularly limited as long as positions of specific guide member 126 and holder 132 can be fixed when opening 126a and convex part 134c are fitted into each other.

### THIRD EXEMPLARY EMBODIMENT

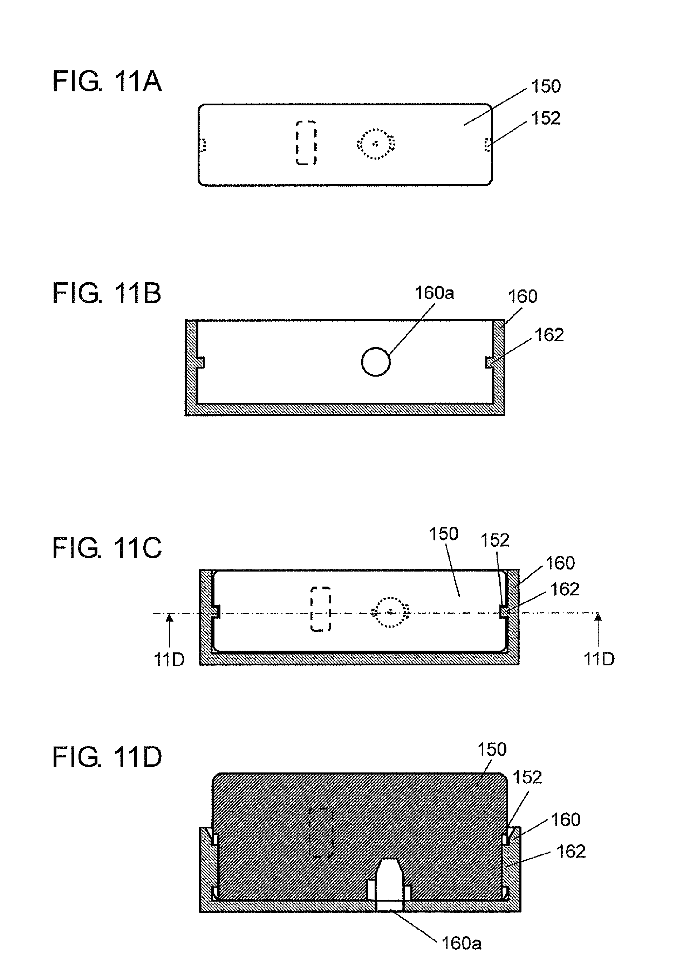

Fig. 11A is a schematic plan view illustrating a structure of a device to be used in a fuel supply apparatus in accordance with a third exemplary embodiment of the present invention. Fig. 11B is a schematic plan view illustrating a guide member of the fuel supply apparatus in accordance with this exemplary embodiment. Fig. 11C is a schematic top plan view showing a state in which guide member 106 is engaged into a device in the fuel supply apparatus in accordance with this exemplary embodiment. Fig. 11D is a sectional view taken on line 11D-11D of Fig. 11C. Note here that since other components are the same as those in the first exemplary embodiment, the description thereof may be omitted.

That is to say, as shown in Figs. 11A and 11B, this exemplary embodiment is different from the first exemplary embodiment in that slide groove 152 is provided in the outer shape of device 150 and at the position corresponding to slide rail 162 provided on guide member 160. In this configuration, it is preferable that the surface shape of slide rail 162 provided on guide member 160 has a curved shape at the position that is brought into contact with slide groove 152 of device 150.

According to this exemplary embodiment, a device can be securely allowed to conform to and fitted into a guide member adapted to the device. As a result, as compared with the case where a device is fitted into a guide member in a state in which it is brought into contact with the side surface or the convex part of the guide member, positioning can be carried out with high accuracy.

### FORTH EXEMPLARY EMBODIMENT

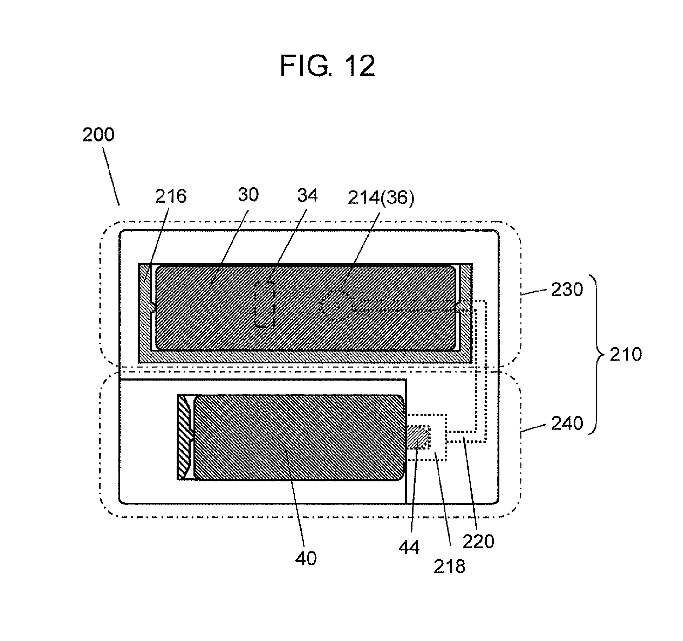

Fig. 12 is a schematic perspective plan view illustrating a structure of a fuel supply apparatus in accordance with a fourth exemplary embodiment of the present invention. Fig. 12 illustrates an example in which fuel cartridge 40 and device 30 such as a portable telephone are placed on and connected to fuel supply apparatus 200 as in the first exemplary embodiment.

As shown in Fig. 12, fuel supply apparatus 200 has holder 210 having a configuration in which device holder part 230 for holding device 30 and cartridge holder part 240 for holding a fuel cartridge are integrated into each other.

Fuel supply apparatus 200 includes first connector 214 and second connector 218 integrated and incorporated into holder 210, and connecting pipe 220 connecting the first connector with the second connector. Furthermore, cartridge holder part 240 has a groove (not shown) corresponding to the shape of the fuel cartridge to be mounted. For example, by allowing the fuel cartridge to slide along the groove, the fuel cartridge can be connected to second connector 218 easily. Furthermore, similar to each of the above-mentioned exemplary embodiments, device holder part 230 has a configuration in which first connector 214 provided on device holder part 230 and fuel injection section 36 of device 30 can be easily connected via guide member 216 having a shape conforming to the outer shape of device 30. Note here that since the configurations of the fuel cartridge and the device are the same as those in the first exemplary embodiment, the description thereof is omitted.

Then, in above-mentioned fuel supply apparatus 200, fuel injection section 36 of device 30 held by device holder part 230 via guide member 216 is connected to first connector 214, fuel supply section 44 of fuel cartridge 40 held by cartridge holder part 240 is connected to second connector 218, and a fuel in the fuel cartridge is supplied to power generation section 34 of device 30 via connecting pipe 220.

According to this exemplary embodiment, fuel cartridge 40 and device 30 are held stably, and mounted easily. Furthermore, fuel in fuel cartridge 40 can be supplied to device 30 securely and efficiently via fuel supply apparatus 200.

Furthermore, the fuel supply apparatus can be used in common by exchanging guide members according to the shapes of devices. Thus, a user-friendly and highly convenient fuel supply apparatus can be achieved. Furthermore, the above-mentioned configuration can be applied to each of the above-mentioned exemplary embodiments.

Note here that each of the above-mentioned exemplary embodiments describes an example in which a liquid fuel is used. However, the fuel is not necessarily limited to these examples, and for example, a gas fuel such as butane and hydrogen can be used.

### INDUSTRIAL APPLICABILITY

According to a fuel supply apparatus of the present invention, a plurality of devices can be used by using one holder in common. Therefore, the fuel supply apparatus is excellent in energy saving and resistance to environment and useful for users who use a plurality of devices by the same fuel.

## Claims

1. A fuel supply apparatus for connecting a device including at least a part of a power generation section that has a fuel cell and having a fuel injection section with a fuel cartridge having a fuel supply section so as to send fuel in the fuel cartridge to the power generation section side, the fuel supply apparatus comprising:
a holder having a first connector to be connected to the fuel injection section of the device;
a second connector to be connected to the fuel supply section of the fuel cartridge;
a connecting pipe connecting the first connector with the second connector; and
a guide member configured to guide connection between the first connector of the holder and the fuel injection section of the device.

2. The fuel supply apparatus according to claim 1,
wherein mechanical keys corresponding to the guide member and the holder as well as the guide member and the device are provided.

3. The fuel supply apparatus according to claim 1,
wherein the guide member is a guide member corresponding to the device having a different shape, and the guide member is made to be attachable and detachable with respect to the first connector, and thereby the fuel in the fuel cartridge is supplied to the device by using the holder in common.

4. The fuel supply apparatus according to claim 1,
wherein the first connector includes a pair of mechanical keys capable of being coupled to the fuel injection section of the device.

5. The fuel supply apparatus according to claim 1,
wherein the holder further comprises a cartridge holder part configured to hold the fuel cartridge.
